(19)

Europäisches
Patentamt
European
Patent Office
Office européen
des brevets

(11) **EP 2 611 098 A1**

(12) **EUROPEAN PATENT APPLICATION**

(43) Date of publication:
**03.07.2013 Bulletin 2013/27**

(51) Int Cl.:
**H04L 29/06** *(2006.01)* **H04W 12/12** *(2009.01)*

(21) Application number: **11306806.8**

(22) Date of filing: **29.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Onno, Stephane**
**35576 Cesson Sevigne (FR)**

• **Heen, Olivier**
**35576 Cesson Sevigne (FR)**
• **Neumann, Christoph**
**35576 Cesson Sevigne (FR)**

(74) Representative: **Huchet, Anne et al**
**Technicolor**
**1-5 rue Jeanne d'Arc**
**92130 Issy-les-Moulineaux (FR)**

(54) **Method and device for fingerprinting of network devices**

(57)     The invention relate to a method for fingerprinting at least one network device comprising, in a monitoring device, a step of computing a passive fingerprint from a plurality of parameters of the at least one network device. The method being remarkable in that it comprises a step of modifying at least one parameter among the plurality of parameters of the at least one remote networked device, wherein the parameters modification is derived from a function over the time called diversity function, the modified parameters result in a variation of the passive fingerprint of the at least one network device in order to increase the fingerprint diversity, and wherein said variation of the passive fingerprint is limited to a determined range in order to preserve the fingerprint stability.

The invention is particularly suitable for IEEE 802.11 and for a fingerprinting method based on inter-arrival time histogram.

Figure 4

EP 2 611 098 A1

## Description

TECHNICAL FIELD

The present invention relates generally to device fingerprinting and in particular to passive fingerprinting of network devices.

BACKGROUND

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

For the purposes of the present invention device fingerprinting means gathering information about a device in order to characterize it. This process yields a signature, also called fingerprint, which describes the device's observed features in a compact form. If the generated signature is distinctive enough, it may be used to identify the device among others devices of a network. Thus fingerprinting process has two stages: the learning stage where reference signatures are generated, the detection stages where candidate signatures are compared to the reference signatures.

In several situations there is a need for an accurate wireless fingerprinting process.

The description will be focused on fingerprinting devices that implement the standard for wireless communication called IEEE Standard for Information technology - Telecommunications and information exchange between systems - Local and metropolitan area networks - Specific requirements Part 11: Wireless LAN Medium Access Control (MAC) and Physical Layer (PHY) Specifications; for short called IEEE 802.11 and defined in IEEE Std 802.11-1999 (hereinafter 802.11). This standard is for example used by WiFi. It will however be appreciated that the invention may also be used to fingerprint devices that implement other suitable communication techniques, such as for example ALOHA.

A primary application of 802.11 device fingerprinting is the prevention of **Media Access Control (MAC) address spoofing**. This refers to the action of usurping the MAC address of another device in order to benefit from its authorization. In several scenarios, the prevention of MAC address spoofing is of importance: Open wireless networks such as hot-spots often implement MAC address based access control in order to guarantee that only legitimate client stations (e.g. the devices that has purchased Internet access) connect to the access points. Attackers may then want to steal a legitimate device's session by spoofing the latter's MAC address. This refers to the action of usurping the MAC address of another device in order to benefit from its authorization. As explained above, known methods not always produce unique fingerprints, and thus the anti-MAC spoofing detection is not always accurate enough.

A second application of 802.11 device fingerprinting is **the detection of rogue access point**. Tools like AirSnarf and RawFakeAP enable an attacker to set up a rogue access point, which could make client stations connect to the fake access point instead of the genuine one. A good fingerprinting method should be able to detect above attacks so that countermeasures may be taken. An accurate fingerprinting system helps detecting such attack: a station may learn the signature of some hot-spots and check if this signature is changing later on. If the signature changes too much, the station will report a possible rogue access point attack.

A third application of 802.11 device fingerprinting is **the recognition of environment through fingerprinting.** A device may use wireless fingerprinting to record the characteristics of its wireless environment. The device may then adapt its security to the environment. For instance, a laptop may require user password when not at home, and not require any password when at home. In such case, the accuracy of the fingerprinting mechanism is critical.

A fourth application of 802.11 device fingerprinting is **counting devices.** A robust wireless fingerprinting may be used to count wireless devices in the vicinity of a fingerprinter. Because the fingerprinting method is robust, an attacker can only create signatures of non-existing devices. Thus the number of devices counted is at least the number of real devices. Such information may be used for instance in home networks to check the expected number of devices. A number higher than expected may reveal attackers in the network. Indeed, it can make sense to use fingerprint signature verification even in wireless networks protected by a key, e.g. Wi-Fi Protected Access (WPA). Fingerprinting may be used after the wireless authentication mechanism in order to control that only authorized devices are in the network. Indeed, keys may leak as there are several normal situations in which users voluntarily give out their Wi-Fi key. For instance, when inviting a friend and allowing his laptop to access the home network. While this scenario is both common and simple, it also endangers the home network; the key may later leak from the invited laptop or the friend may abusively reconnect. Finally, tools exist that allow hackers to crack the WEP protocol, which is known to be insecure, and there are currently existing services, e.g. WPA Cracker, that try to discover WPA keys.

A fifth application of 802.11 device fingerprinting is **the user or device tracking**. Pang et al. discuss privacy implications of 802.11. Their paper highlights that users are not anonymous when using 802.11 as the protocol uses globally unique identifiers (i.e. the MAC addresses) that allows user tracking. Even if this identifier is masked - e.g. by temporarily changing addresses - it is still possible to track users by observing a set of parameters (used as implicit identifiers) in the 802.11 protocol. The authors apply a naive Bayes classifier on four implicit identifiers, namely network destinations, network names advertised in 802.11 probes, 802.11 configuration options and broadcast frame sizes. Three out of the four parameters apply even when the traffic is encrypted. Using busy hot spot test traces, they could identify 64% of users with 90% accuracy. See for example J. Pang, B. Greenstein, R. Gummadi, S. Seshan, and D. Wetherall, "802.11 User Fingerprinting", In Proceedings of ACM MobiCom'07, September 2007.

Wireless fingerprinting comprises other applications that do not necessarily involve security such as locating devices, enabling services based on automatic device identification. Wireless fingerprinting can also be used to monitor wireless networks.

The prior art comprises a number of solutions for fingerprinting wireless devices by analyzing implementation specificities of the network card and/or driver, therefore creating passive fingerprinting.

For instance, Franklin et al. characterize the drivers during the "active scanning period" where the card is searching for available wireless network. This searching process is underspecified in the 802.11 standard regarding the frequency and order of sending probe requests. Each manufacturer therefore implements its own algorithm and timers during this period. See J. Franklin, D. McCoy, P. Tabriz, V. Neagoe, J. V. Randwyk, and D. Sicker; "Passive Data Link Layer 802.11 Wireless Device Driver Fingerprinting"; In Proceedings Usenix Security 06, August 2006. A major drawback of this passive fingerprinting technique is that it only works during a short and specific period at the start of the wireless protocol. A similar solution is found in D.C.C. Loh, C.Y. Cho, C.P. Tan and R.S. Lee, "Identifying Unique Devices through Wireless Fingerprinting", In WiSec'08, April 2008.

Gopinath et al. show that the 802.11 cards exhibit very heterogeneous behaviour which is due to implementation specificities. They tested a set of 802.11 features such as Random Back-off timers and Virtual Carrier Sensing (NAV mechanism). The authors indicate that the observed heterogeneity in behaviour may be used to fingerprint a card's vendor and model. See K. Gaopinath, P. Bhagwat, and K. Gopinath; "An Empirical Analysis of Heterogeneity in IEEE 802.11 MAC Protocol Implementations and Its Implications"; In Proceedings of ACM WiNTECH'06, September 2006. However, the paper does not further analyze this aspect and just presents bare experimental results.

Bratus et al. propose a method that uses the above work and performs actual fingerprinting of wireless client stations and access points. According to their method, malformed or non-standard stimulus frames are sent to the device to be fingerprinted and a decision tree is applied to the response or behaviour of the device in order to fingerprint the vendor/manufacturer. See S. Bratus, C. Cornelius, D. Kotz, and D. Peebles; "Active Behavioral Fingerprinting of Wireless Devices"; In Proceedings of ACM WiSec'08, March 2008. A main drawback of this technique is that it is active, not passive.

In contrast to Pang teaching that one can identify devices through fingerprinting, common to all of the approaches hereinbefore is that known fingerprinting methods cannot differentiate between two devices using the same network card and driver. These approaches may thus for example not be used for detecting MAC address spoofing and even less order to identify the devices for above described application.

It will therefore be appreciated that there is a need for a solution that can improve passive fingerprinting accuracy. In other words, the problem to solve is to differentiate enough one device's signature from another device's signature.

The present invention provides such a solution.

SUMMARY OF INVENTION

In a first aspect, the invention is directed to a method for fingerprinting at least one network device wherein the method comprises, in an monitoring device, a step of computing a passive fingerprint from a plurality of parameters of the at least one network device. The method further comprises a step of modifying at least one parameter among the plurality of parameters of the at least one network device. The parameters modification is derived from a function over the time called diversity function, the modified parameters result in a variation of the passive fingerprint of the at least one network device in order to increase the fingerprint diversity, the variation of the passive fingerprint is limited to a determined range in order to preserve the fingerprint stability. The invention does not require any identification nor authentication mechanism other than a robust fingerprinting method itself. In particular the monitoring devices, called fingerprinters, and client devices, called fingerprintees, do not need to share any secret or third trusted party as for active fingerprinting.

In a first preferred embodiment, the method comprises a preliminary step of installing, on the at least one network device, a piece of software implementing the diversity function.

According to an advantageous characteristic, the diversity function comprises a pseudo-random generator. According to an advantageous characteristic, the diversity function is seeded so that, for each seed, the diversity function returns different values for a parameter among the plurality of parameters. In a first variant, the seed is determined, once, at the preliminary step of installing, on the at least one remote network device, the piece of software implementing the diversity function. In a second variant, the seed is periodically renewed.

According to an advantageous characteristic, the diversity function follows a normal distribution whose mean and variance are determined at the step of installing the diversity software.

In a second preferred embodiment, the network device is advantageously compatible with a wireless device using IEEE 802.11 standard. The passive fingerprint is advantageously compatible with passive fingerprint relying on frame inter-arrival time histograms comprising a first bin corresponding to the Short Interframe Space (SIFS), a second bin corresponding to the Distributed coordination function Interframe Space (DIFS) minus the Short Interframe Space (SIFS), and at least a third and a fourth bin, each corresponding to the length of a timeslot (aSlotTime). In this variant, the diversity function advantageously modifies the Short Inter Frame Space (SIFS).

In a second aspect, the invention is directed to a network device of which a passive fingerprint is computed from a plurality of parameters of the network device. The network device comprises means adapted to modify at least one parameter among the plurality of parameters of the network device. The parameters modification is derived from a function over the time called diversity function; the modified parameters result in a variation of the passive fingerprint of the network device in order to increase the fingerprint diversity, the variation of the passive fingerprint is limited to a determined range in order to preserve the fingerprint stability.

Any characteristic or embodiment described for the fingerprinting method is compatible with the network device intended to be monitored by the fingerprinting method.

BRIEF DESCRIPTION OF DRAWINGS

Preferred features of the present invention will now be described, by way of non-limiting example, with reference to the accompanying drawings, in which:

> **Figure 1** illustrates an exemplary network in which the present invention may be used;
> **Figure 2** illustrates an exemplary monitoring station according to a preferred embodiment of the present invention;
> **Figure 3** illustrates an exemplary client device according to a preferred embodiment of the present invention;
> **Figure 4** illustrates the steps of the fingerprinting method in the client device according to the first embodiment of the present invention; and
> **Figure 5** illustrates exemplary fingerprints variation generated by a preferred embodiment of the present invention.

DESCRIPTION OF EMBODIMENTS

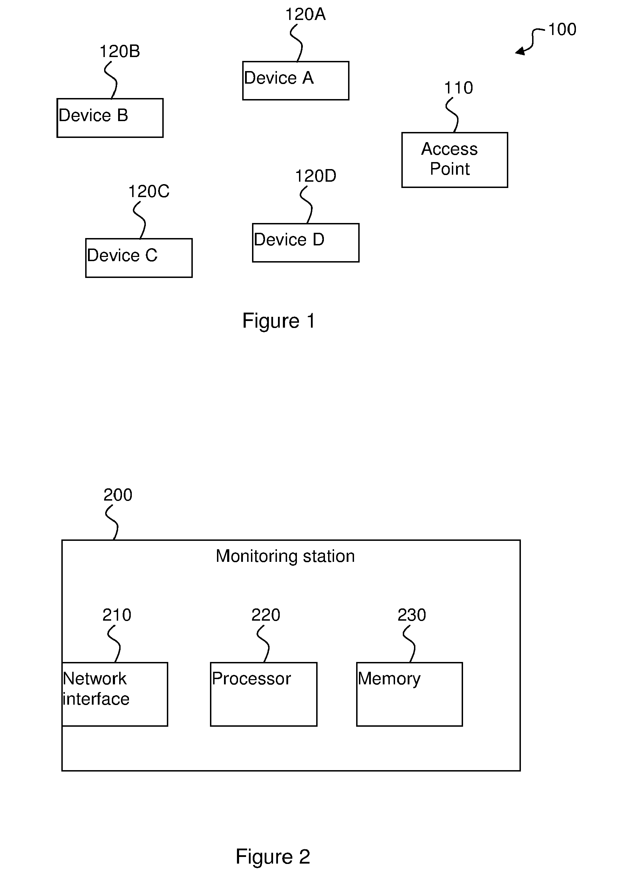

**Figure 1** illustrates an exemplary network 100 in which the present invention may be used. The network 100, for instance a wireless network, comprises an access point (AP) 110 and a plurality of client devices 120A-D (which may be jointly referred to as 120). The AP 110 is adapted to communicate with the client devices 120 and, for example, provide Internet access to them.

A salient inventive idea of the present invention is to increase the accuracy of the monitoring, preferably in the access point 110, of network traffic through passive fingerprinting. To that end, a slight modification is added into the signature of client devices 120. The modification remains in the range tolerated by the fingerprinting method in order to not erase the signatures. To that end, a function implemented as hardware or software on client devices 120, which we call diversity function, modifies parameters relevant to the signature of client devices 120. Advantageously, the invention does not require modification of the monitoring method nor of the fingerprinting method.

Preferably the diversity function is implemented on many client devices 120. The result is a better distribution of the signatures, leading to better overall accuracy of the fingerprinting method.

The diversity function modifies the value of wireless parameters P of the client devices 120 over which it is implemented. The chosen parameters P must be relevant to the fingerprinting method. According to the many existing fingerprint methods as those described in D.C.C. Loh, C.Y. Cho, C.P. Tan and R.S. Lee, "Identifying Unique Devices through Wireless Fingerprinting", In WiSec'08, April 2008; in J. Pang, B. Greenstein, R. Gummadi, S. Seshan, and D. Wetherall, "802.11 User Fingerprinting", In Proceedings of ACM MobiCom'07, September 2007 or in S. Bratus, C. Cornelius, D. Kotz, and D. Peebles; "Active Behavioral Fingerprinting of Wireless Devices"; In Proceedings of ACM WiSec'08, March 2008 such parameters can be, by way of non-limiting examples, packet transmission durations, time values relevant to the wireless protocol, ordering of some transmissions.

**Figure 2** illustrates an exemplary monitoring station according to a preferred embodiment of the present invention. The monitoring station is for example the network access point. The monitoring station 200 comprises a network interface 210, such as a 802.11 wireless card, at least one processor 220 (hereinafter "processor") and memory 230. The network interface 210 is adapted to monitor network traffic, the processor 220 is adapted to analyse the monitored traffic by, as will be seen in further detail hereinafter, measuring parameters salient to the fingerprinting method and detecting the sender, and the memory 230 is adapted to store data such as device fingerprints. The processor 220 is further adapted to compare received traffic in order to identify a sending device. Only the features necessary for the comprehension of the invention are detailed; it will be understood that the monitoring station 200 may further comprise internal connections and possibly, for example, a (wire-based) communication interface and a user interface.

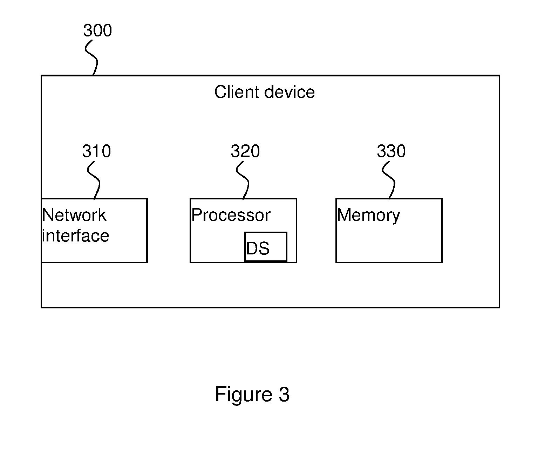

**Figure 3** illustrates an exemplary client device, for instance client devices 120, implementing the diversity function according to a preferred embodiment of the present invention. The client device 300 comprises a network interface 310, such as a 802.11 wireless card, at least one processor 320 (hereinafter "processor") and memory 330. The network interface 310 is adapted to connect the client device to an access point device, the processor 320 is adapted to implement a diversity software DS, as will be seen in further detail hereinafter, modifying parameters salient to the fingerprinting method for instance parameters of the network interface 310. In a variant, the diversity function is implemented in a piece of hardware. However, in this variant, the diversity function is not renewable. Only the features necessary for the comprehension of the invention are detailed.

Advantageously the method is compliant with any fingerprinting method F exploiting the value of a set of parameters Pd relevant to the fingerprinting method F and used in network connection by the client device 300 noted d in the formulas. The generated signature S function of the time t is represented by the formula:

$$S = F(Pd, t)$$

The modification applied to the parameters Pd is modelled as a diversity function δ. When the diversity function is implemented on device d, the generated signature is modified into S'. S' is represented by the formula :

$$S' = F(δ(Pd, t), t)$$

The salient characteristic of the invention is the function δ. The function δ modifies the values of the parameters Pd over time with the 2 requirements. Firstly, the modified parameters have an effect on the signature of device d. Secondly, the variation of the parameters remains in a range acceptable by the fingerprinting method F, so that the signature is not erased by the adjunction of function δ. The function δ is not likely to be further defined without unduly reducing the scope of the invention. However, the function is described for an embodiment of the fingerprinting method. Besides, for convenience and compatibility with existing applications, the modification should not have a noticeable impact on the overall performance of client devices.

The diversity function δ is seeded so that two diversity functions δ with two different seeds return different values for a same parameter. The seed can be chosen at installation time of the diversity software and never change afterwards, or the seed can be renewed from time to time. According to variants, the seed is renewed on each boot, or every hour.

The description of such a diversity function δ is described later for a first embodiment of the fingerprinting method. The method is described in an international patent application (PCT/EP11/070830) filed on November 23rd, 2011 by the applicant and proposing a method and a device for fingerprinting of wireless communication devices. The patent application discloses a robust wireless fingerprinting method relying on inter-arrival histograms (SIFS).

In the first embodiment of the fingerprinting method, the diversity function δ is optimized for identifying client devices. The function δ applies modifications following a normal distribution to parameters relevant to inter-arrival time where the mean μ and the variance σ2 are set at installation time of the software on the client devices. According to variant embodiments, other diversity functions are advantageously optimized for other applications of fingerprinting such as counting of network devices or for enhancing the furtiveness of devices. To achieve the latter objective the behaviour of diversity function is modified at each boot or every hour. Thus by repeated modifications, the diversity function advantageously hides signature characteristics of a client device.

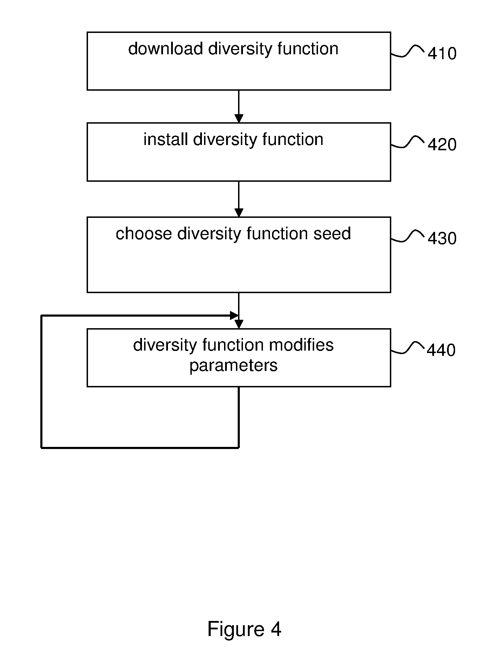

**Figure 4** illustrates the steps of fingerprinting method in the client device according to the first embodiment of the present invention. The first embodiment is adapted for identifying client devices based on inter-arrival time fingerprint for 802.11 wireless devices. However, the invention is not limited to 802.11 devices and the invention is compatible to other flavours of wireless devices wherein such fingerprint applies. In a step 420, a diversity function implemented in software is installed on the client devices 300 in the vicinity of a monitoring station 200. In a step 410 preliminary to the installation step 420, the diversity software is for instance downloaded by the client device 300. The skilled in the art will appreciate that the software is common to all devices and that no secret is required either by the server providing the diversity software, the client device or the monitoring station for setting the software. In a variant, the diversity function is implemented in hardware during manufacturing. In a step 430, the diversity software/hardware randomly chooses the seed of the function. In the first embodiment, the seed comprises two values: the mean μ and the variance σ2 of the diversity function δ. In a variant adapted to device identification, the values are determined once, either during or just after the installation step. In step 440, the diversity software/hardware modifies the value of determined 802.11 parameters according to a normal distribution using the mean μ and the variance σ2. The step 440 is repeatedly performed while the client device is running and is connected to the network.

In the first embodiment, the 802.11 parameter modified by the diversity software is the Short Inter Frame Space (SIFS). Thus the new signature is

$$S' = F(δ(SIFS, t), t)$$

The 802.11 standard sets the value of this parameter to 10μs. The 802.11 standard prescribes a variation range of 10%. A suitable diversity function advantageously comprises the value of the mean μ between [-1, 1].

For a client device using the mean μ and the variance σ2, the SIFS value in μs is given by a formula:

$$\delta(SIFS,t) = 10 + RandN(\mu, \sigma2)$$

Where RandN is a random number generator using the normal distribution function with mean μ and variance σ2. The skilled in the art knows a method for generating a batch of random values following the normal distribution.

Because the seeds of all client devices are different, the variations of the SIFS are advantageously not correlated in anyway. Two client devices that had very similar fingerprints without the diversity software have now different fingerprints.

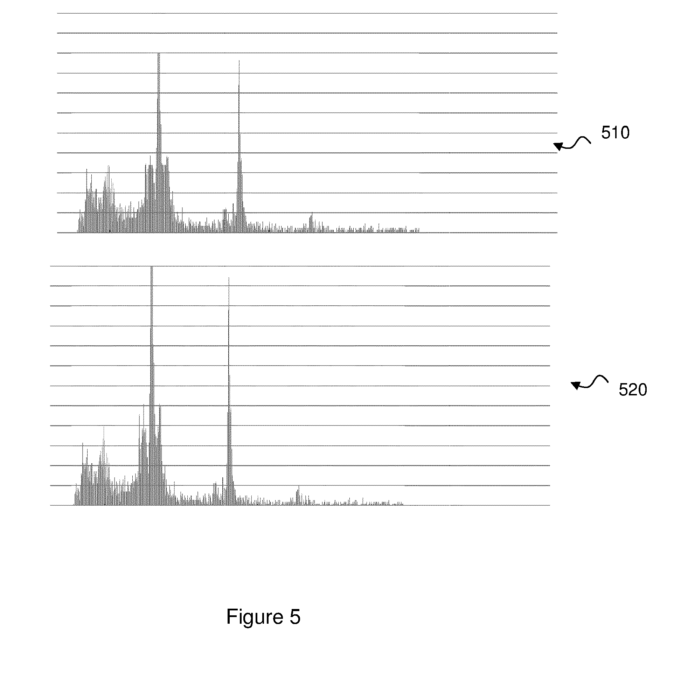

**Figure 5** shows the effect of the diversity function δ on an inter-arrival histogram according to the fingerprinting method. Original histogram 510 without diversity function is first represented. The histogram 520 resulting from diversity function is then represented. Compared to the resulting histogram 520, the original histogram 510 is slightly shifted to the right and maximum values are flattened, and the overall curve is smoothed. Thus it will be easier to identify a client device from the resulting histogram 520 than from the original histogram 510. In other words, since the signature from one device to others is very different, the device identification is highly improved thanks to reduce false positives and/or false negatives

Because the variation of the SIFS remains within the accepted range of 10%, the inter-arrival histogram is not fully degraded and provides signature of the client devices. This point is critical to the invention, as larger variation may totally discard the signature and finally lead to a decreased overall accuracy of the identification method.

The skilled person will appreciate that the fingerprinting method described herein can be used in a number of different applications. The method may for example be used to complement the MAC address based access control that is often implemented, in particular in home networks. Since the method provides an almost unforgeable signature. Indeed an attacker having Wi-Fi measurement tools could get and analyses the Wi-Fi traces and may be analyze the signature but he could not easily reproduce the client device behaviour, thus could not spoof the device. Besides, the invention may also be used to improve furtiveness by hiding signature characteristics of a user's device, especially when the seed is regularly renewed.

The skilled person will also appreciate that as the fingerprinting method can be implemented quite easily without the need for special equipment, it may be implemented by 'normal' user devices such as PCs, mobile phones, gateways in home networks and so on.

Each feature disclosed in the description and (where appropriate) the claims and drawings may be provided independently or in any appropriate combination. Features described as being implemented in software may also be implemented in hardware, and vice versa. Reference numerals appearing in the claims are by way of illustration only and shall have no limiting effect on the scope of the claims.

**Claims**

1. Method for fingerprinting at least one network device (120) comprising, in a monitoring device (110), a step of computing a passive fingerprint from a plurality of parameters of the at least one network device (120) **characterized in that** the method comprises, in the at least one network device, a step of modifying (440) at least one parameter among the plurality of parameters of the at least one network device,

   • wherein the parameters modification is derived from a function over the time called diversity function (δ),
   • wherein the modified parameters result in a variation of the passive fingerprint of the at least one network device in order to increase the fingerprint diversity,
   • and wherein said variation of the passive fingerprint is limited to a determined range in order to preserve the fingerprint stability.

2. Method according to claim 1 **characterized in that** the method comprises a preliminary step of installing (420), on the at least one network device (120), a piece of software (DS) implementing the diversity function (δ).

3. Method according to claim 2 **characterized in that** the diversity function (δ) comprises a pseudo-random generator.

4. Method according to claim 3 **characterized in that** the diversity function (δ) is seeded so that, for each seed, the diversity function returns different values for a parameter among the plurality of parameters.

5. Method according to claim 4 **characterized in that** the seed is determined (430), once, at the preliminary step of installing, on the at least one remote network device, the piece of software implementing the diversity function.

6. Method according to claim 4 **characterized in that** the seed is periodically renewed.

7. Method according to any of claims 2 to 6, **characterized in that** the diversity function follows a normal distribution whose mean and variance are determined at the step of installing the diversity software.

8. Method according to any of claims 1 to 6, wherein the network device is a wireless device using IEEE 802.11 standard.

9. Method according to claim 8, wherein passive fingerprint relies on inter-arrival time histograms comprising a first bin corresponding to the Short Interframe Space (SIFS), a second bin corresponding to the Distributed coordination function Interframe Space (DIFS) minus the SIFS, and at least a third and a fourth bin, each corresponding to the length of a timeslot (aSlotTime).

10. Method according to claim 9, wherein the diversity function modifies the Short Inter Frame Space (SIFS).

11. Network device (120) of which a passive fingerprint is computed from a plurality of parameters of said network device, **characterized in that** the network device comprises means adapted to modify at least one parameter among the plurality of parameters of the network device,

> • wherein the parameters modification is derived from a function over the time called diversity function ($\delta$),
> • wherein the modified parameters result in a variation of the passive fingerprint of the network device in order to increase the fingerprint diversity,
> • and wherein said variation of the passive fingerprint is limited to a determined range in order to preserve the fingerprint stability.

12. Network device according to claim 11 **characterized in that** means adapted to modify at least one parameter among the plurality of parameters of the network device comprises a piece of software (DS) implementing the diversity function ($\delta$).

13. Network device according to claim 12 **characterized in that** the piece of software comprises a pseudo-random generator.

14. Network device according to claim 13 **characterized in that** the diversity function ($\delta$) is seeded so that, for each seed, the diversity function returns different values for a parameter among the plurality of parameters.

15. Network device according to any of claims 12 to 14, **characterized in that** the diversity function follows a normal distribution whose mean and variance are determined in the diversity software.

120B

120A

Device A

100

120B

Device B

110

Access
Point

120C

120D

Device C

Device D

Figure 1

200

Monitoring station

210

220

230

Network
interface

Processor

Memory

Figure 2

300

Client device

310

320

330

Network interface

Processor

DS

Memory

Figure 3

download diversity function 410

install diversity function 420

choose diversity function seed 430

diversity function modifies parameters 440

Figure 4

Figure 5

Europäisches
Patentamt

European
Patent Office

Office européen
des brevets

## EUROPEAN SEARCH REPORT

Application Number

EP 11 30 6806

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | FRANKLIN J ET AL: "Passive Data Link Layer 802.11 Wireless Device Driver Fingerprinting", 1 August 2006 (2006-08-01), PROCEEDINGS OF THE USENIX SECURITY SYMPOSIUM, XP002669055, pages 167-178, | 1-9, 11-15 | INV. H04L29/06 H04W12/12 |
| A | * abstract * * 1. Introduction * * 4. Device Driver Fingerprinting * * 5. Evaluation * * 7. Preventing Fingerprinting * ----- | 10 | |
| X,D | Jeffrey Pang ET AL: "802.11 User Fingerprinting", proceedings of MobiCom'07, September 9-14, 2007, Montréal, Québec, Canada, 9 September 2007 (2007-09-09), pages 99-110, XP55031698, Retrieved from the Internet: URL:http://delivery.acm.org [retrieved on 2012-07-04] | 1,11 | |
| A | * abstract * * 1. Introduction * * 2. The Implicit Identifier Problem * * 4. Experimental Setup * ----- | 2-10, 12-15 | TECHNICAL FIELDS SEARCHED (IPC) H04L H04W H04M |
| A,D | LOH D C C ET AL: "Identifying Unique Devices through Wireless Fingerprinting", 31 March 2008 (2008-03-31), WISEC'08, ALEXANDRIA, VIRGINIA, USA, PAGE(S) 1 - 10, XP002669056, ISBN: 978-1-59593-814-5 * the whole document * ----- | 1-15 | |

-/--

The present search report has been drawn up for all claims

| Place of search | Date of completion of the search | Examiner |
|---|---|---|
| The Hague | 5 July 2012 | Poppe, Fabrice |

EPO FORM 1503 03.82 (P04C01)

Europäisches
Patentamt
European
Patent Office
Office européen
des brevets

**EUROPEAN SEARCH REPORT**

Application Number

EP 11 30 6806

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | K. N. Gopinath ET AL: "An Empirical Analysis of Heterogeneity in IEEE 802.11 MAC Protocol Implementations and its Implications", proceedings of WiNTECH'06, September 29, 2006, Los Angeles, California, USA, 29 September 2006 (2006-09-29), pages 80-87, XP55031699, Retrieved from the Internet: URL:http://delivery.acm.org [retrieved on 2012-07-04] * the whole document * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 5 July 2012 | Poppe, Fabrice |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 11070830 W

**Non-patent literature cited in the description**

- **J. PANG ; B. GREENSTEIN ; R. GUMMADI ; S. SESHAN ; D. WETHERALL.** 802.11 User Fingerprinting. *Proceedings of ACM MobiCom'07,* September 2007
- **J. FRANKLIN ; D. MCCOY ; P. TABRIZ ; V. NEAGOE ; J. V. RANDWYK ; D. SICKER.** Passive Data Link Layer 802.11 Wireless Device Driver Fingerprinting. *Proceedings Usenix Security,* 06 August 2006
- **D.C.C. LOH ; C.Y. CHO ; C.P. TAN ; R.S. LEE.** Identifying Unique Devices through Wireless Fingerprinting. *WiSec'08,* April 2008
- **K. GAOPINATH ; P. BHAGWAT ; K. GOPINATH.** An Empirical Analysis of Heterogeneity in IEEE 802.11 MAC Protocol Implementations and Its Implications. *Proceedings of ACM WiNTECH'06,* September 2006
- **S. BRATUS ; C. CORNELIUS ; D. KOTZ ; D. PEEBLES.** Active Behavioral Fingerprinting of Wireless Devices. *Proceedings of ACM WiSec'08,* March 2008
- **D.C.C. LOH ; C.Y. CHO ; C.P. TA ; R.S. LEE.** Identifying Unique Devices through Wireless Fingerprinting. *WiSec'08,* April 2008